# EUROPEAN PATENT SPECIFICATION

(11) **EP 4 006 933 B1**
(45) Date of publication and mention of the grant of the patent: **18.02.2026**
(21) Application number: 20209698.8
(22) Date of filing: 25.11.2020
(51) Int. Cl.: H01G 2/04, H01G 2/08, H01G 2/10, H01G 4/224, H01L 23/42, H01L 23/467, H01L 23/34, H05K 7/00, H05K 7/20, H01M 50/30, H01G 4/32

(54) **A PRESSURE RELIEF ARRANGEMENT**
DRUCKENTLASTUNGSANORDNUNG
AGENCEMENT DE DÉCOMPRESSION

(43) Date of publication of application: 01.06.2022
(73) Proprietor: ABB Schweiz AG, 5400 Baden (CH)
(72) Inventor: Rapinoja, Hanna, 00380 Helsinki (FI); Salmia, Teemu, 00380 Helsinki (FI); Hartikainen, Pyry, 00380 Helsinki (FI)
(74) Representative: Kolster Oy Ab

(56) References cited:
- EP-A1- 1 298 739
- EP-A1- 3 321 945
- DE-A1- 102013 009 212
- US-A- 3 904 441
- US-A- 4 219 612
- US-A1- 2003 113 612
- US-A1- 2017 237 054

## Description

### FIELD

The present invention relates to a pressure relief arrangement.

### BACKGROUND

A pressure relief arrangement may be formed of a pressure relief hatch mounted on an enclosure comprising electrical equipment. A short circuit inside the enclosure may ignite an arc within the enclosure. The arc may heat up the air surrounding the arc causing the air to expand in an explosive manner. The pressure within the enclosure will thus increase causing deformations to the enclosure. The deformations may break the enclosure causing a danger to people outside the enclosure. Pressure relief hatches or other similar means are thus added into closed enclosures in order to discharge the pressure caused by the arc. The pressure and the pressurized fluid i.e. gases developed within the enclosure will be released in a controlled way and in a controlled direction through the pressure relief hatch in the enclosure. The gases may ignite outside the enclosure. A suitable gas concentration in the air outside the enclosure and the presence of heat e.g. caused by a spark may ignite the gases outside the enclosure.

Other phenomena may also cause gas formation and a pressure increase within the enclosure, leading to the eruption of pressurized gases. Polypropylene that is widely utilized as a dielectric medium in film capacitors used in high power applications may cause gas formation and pressure increase within the enclosure. Film capacitors are widely used components in electrical equipment. The melting point of polypropylene is 160 degrees Celsius and polypropylene starts to decompose when the temperature rises above 300 degrees Celsius. The decomposition of polypropylene produces hydrocarbons and causes a pressure rise within the film capacitor. The film capacitor may break due to an overvoltage and/or a too high temperature and/or an unsuccessful self-healing process. The pressure inside the film capacitor may also increase gradually as a result of several successful self-healing processes. The breaking of the film capacitor results in the development of hydrocarbons inside the enclosure.

A concentration of hydrocarbons of about 1 to 20 percent in air may be considered to be critical in view of ignition. The probability that the gases would ignite within a relative small and gas-tight, sealed and/or unventilated, enclosure where pyrolysis takes place is low. The concentration of the hydrocarbons within such an enclosure will rise very rapidly over the critical value 20 percent. The situation is, however, different outside the enclosure where air and/or other gases containing oxygen is present. The probability of ignition is thus higher outside the enclosure. Additionally, the erupting pressurized gases may present a health hazard when inhaled. Inhaling hydrocarbons may cause lung irritation and neurologic problems.

EP 1 298 739 A1 discloses a venter-type leak resistant motor cycle battery. The battery comprises a housing in which a plurality of cells are mounted, a battery cover sealed to an upper end of the housing in a liquid tight manner so that the battery cover overlies the cells each having a vent chamber, a filling hole and a filling plug and a vent chamber cover sealed to the battery cover in a liquid tight manner, the battery cover being provided with a vent line extending in a longitudinal direction of the battery cover in flow communication with the spaces above the cells and having an exit end tilted upwardly toward the outside and a vent cap assembly being fitted to the vent line at the tilted exit end.

US 3 904 441 discloses a battery vent construction. The vent construction discloses a novel venting system for a service free storage battery which allows escape of generated gases but not of battery liquid. The system includes a strip of microporous, hydrophobic filter media extending across vent apertures in the battery cover and a rigid guard over said filter strip which permits gas to escape through passages between the guard and cover and which protects the filter strip from external damage.

US 2003/113612 A1 discloses a catalyst design for VRLA batteries. The design comprises a catalyst device for use with battery cells to recombine oxygen and hydrogen gas and thereby improve the performance and life of such cells. The catalyst device filters out catalyst poisons and controls the temperature of the recombination reactions. A container houses the catalyst within a chamber. A catalyst poison filter is provided in the chamber with the catalyst. The movement of gas and vapor to and from the chamber is controlled by a microporous section of the device. The pore size is chosen to allow gas and vapor to pass, but not liquids, and to also prevent a flame from passing through. Within these parameters the pore size can also be chosen to control and or limit the amount of gas that can pass through to the catalyst in a given time period. Preferably, the microporous section is formed as a disc that seals an opening in the chamber. The filter material is then placed as a layer between the catalyst and the opening such that the poison in the gas must pass through the filter material before reaching the catalyst.

### SUMMARY

An object of the present invention is to achieve an improved pressure relief arrangement.

The pressure relief arrangement according to the invention is defined in claim 1.

The inventive pressure relief arrangement may be used for filtering gases discharging from the enclosure through the pressure relief opening when the pressure within the enclosure increases suddenly e.g. in the event of a short circuit occurring within the enclosure.

The gas filter may be based on an activated carbon filter.

The gas filter may be positioned in connection with the pressure relief opening either in a direct vicinity of the pressure relief opening or at a distance from the pressure relief opening. A channel arrangement may be arranged between the pressure relief opening and the gas filter in order to conduct the pressurized gases from the pressure relief opening to the gas filter.

The gas filter may be positioned in a safer space apart from the enclosure, where the gases discharging from the pressure relief opening are not able to ignite or burn causing damage. This space could be a large open space, a ventilated space, an oxygen-free space, or a space protected from sparks.

Activated carbon cleans fluids by chemical adsorption, whereby detrimental molecules in the fluid to be treated are trapped inside the pore structure of the carbon substrate. The pressurized gases discharging from the pressure relief opening in the enclosure may be directed through the activated carbon filter, wherein detrimental compounds are adsorbed to the activated carbon filter.

The use of activated carbon in the gas filter forms an advantageous embodiment. The material in the gas filter could, however, instead of being based on activated carbon, be based on some other material having similar gas adsorbing properties. The gas filter could be made of e.g. carbon aerogel.

The use of a gas filter in connection with the pressure relief opening increases the user safety of the enclosure being provided with the electric equipment.

The risk of damages to other equipment in the vicinity of the enclosure due to an explosion and/or combustion of the discharging gases outside the enclosure is minimized with the use of the gas filter.

The position of the enclosure on the site may be chosen more freely as the risk for an explosion and/or combustion outside the enclosure of the discharging gases is minimized with the use of the gas filter.

### DRAWINGS

In the following the invention will be described in greater detail by means of preferred embodiments with reference to the attached drawings, in which
Figure 1 shows an enclosure with a pressure relief hatch,
Figure 2 shows a first embodiment of a pressure relief arrangement,
Figure 3 shows a second embodiment of a pressure relief arrangement,
Figure 4 shows a cross section of a first embodiment of a gas filter device for a pressure relief arrangement,
Figure 5 shows a cross section of a second embodiment of a gas filter device for a pressure relief arrangement.

### DETAILED DESCRIPTION

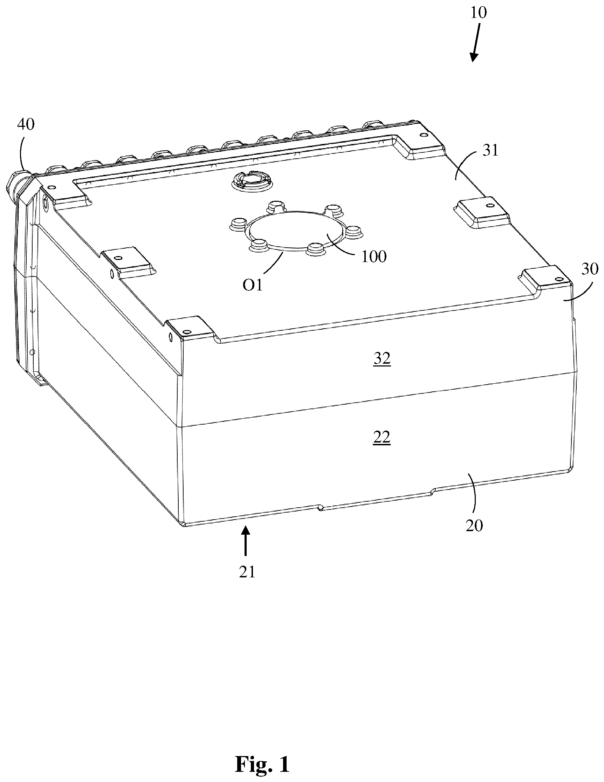

Figure 1 shows an enclosure with a pressure relief hatch.

The enclosure 10 is formed of two halves i.e. a lower half 20 and an upper half 30. The lower half 20 comprises a bottom 21 and side walls 22. The side walls 22 of the lower half 20 extend upwards. The upper half 30 comprises a roof 31 and side walls 32. The side walls 32 of the upper half 30 extend downwards. The upper edges of the side walls 22 of the lower half 20 form a form locking with the lower edges of the side walls 32 of the upper half 30.

A pressure relief arrangement comprises a pressure relief hatch 100 positioned on the roof 31 of the upper half 30 of the enclosure 10. The pressure relief hatch 100 may be positioned in connection with a pressure relief opening O1 provided in the roof 31 of the enclosure 10. The pressure relief hatch 100 closes the pressure relief opening O1 during normal operation. The pressure relief hatch 100 opens the pressure relief opening O1 in case an overpressure occurs within the enclosure 10, wherein the pressurized gases may discharge from the enclosure 10 through the pressure relief opening O1 without breaking the enclosure 10. The pressure relief hatch 100 may comprise a flat spring being connected to the pressure relief hatch 100 and being positioned within the enclosure 10. The flat spring enables the pressure relief hatch 100 to move outwards from the roof 31 of the enclosure 10 when a certain threshold pressure within the enclosure 10 is exceeded. An outlet opening for the gases is then formed between the pressure relief hatch 100 and the roof 31. The overpressure within the enclosure 10 may be caused by a short-circuit within the enclosure 10. The pressure relief hatch 100 could naturally be positioned on any wall 22, 32 of the enclosure 10. The enclosure 10 may be provided with electric equipment, such as busbars, electric drives for electric motors, etc. Connectors 40 may further be provided e.g. on the front wall of the enclosure 10. The connectors 40 may be used for cables being connected to the electric equipment within the enclosure 10.

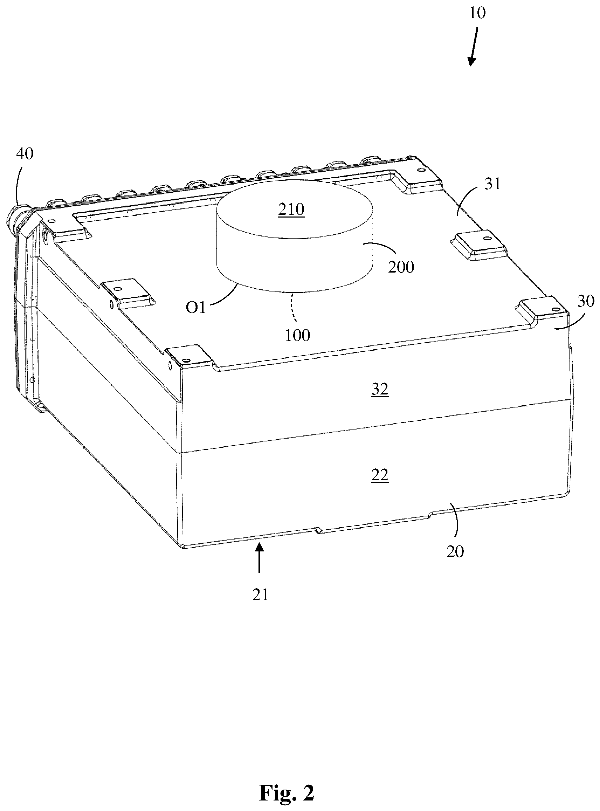

Figure 2 shows a first embodiment of a pressure relief arrangement.

The pressure relief opening O1 in the roof 31 of the enclosure 10 is enclosed with a pressure relief hatch 100 as shown in figure 1. A first casing 200 is further positioned on the roof 31 of the enclosure 10. The first casing 200 may enclose the pressure relief opening O1 and the pressure relief hatch 100 in the roof 31 of the enclosure 10. The first casing 200 may be attached to the roof 31 of the enclosure 10. A gas filter 210 may be arranged within the first casing 200.

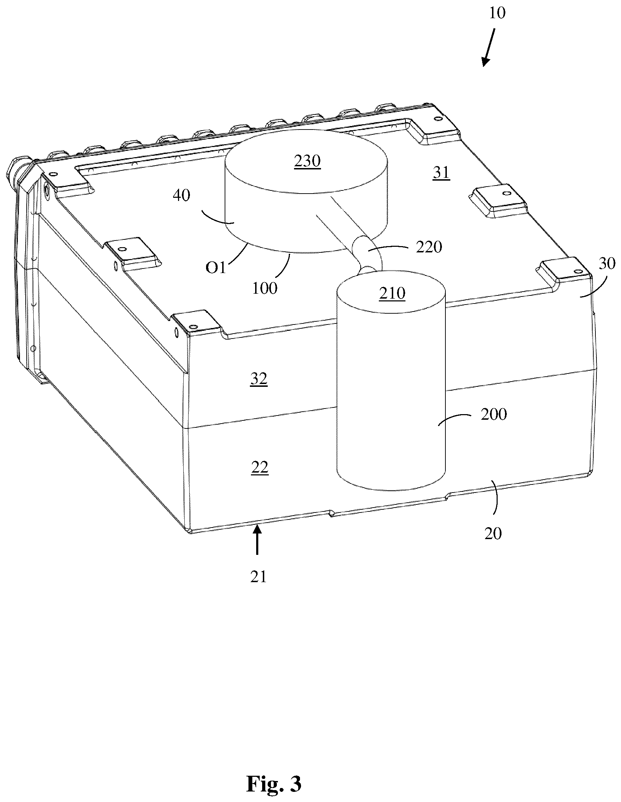

Figure 3 shows a second embodiment of a pressure relief arrangement.

The position of the first casing 200 comprising the gas filter 210 is different compared to the first embodiment disclosed in figure 2. The first casing 200 with the gas filter 210 has been arranged at a distance from the pressure relief hatch 100. A second casing 230 has been arranged on an outer surface of the enclosure 10 so that the second casing 230 encloses the pressure relief opening O1 and the pressure relief hatch 100. A channel arrangement 220 is further arranged between the second casing 230 and the first casing 200 for conducting gases discharging from the activated pressure relief hatch 100 to the first casing 200. The second casing 230 receives the gases discharging from the pressure relief opening O1. The channel arrangement 220 conducts the gases further from the second casing 230 to the first casing 200.

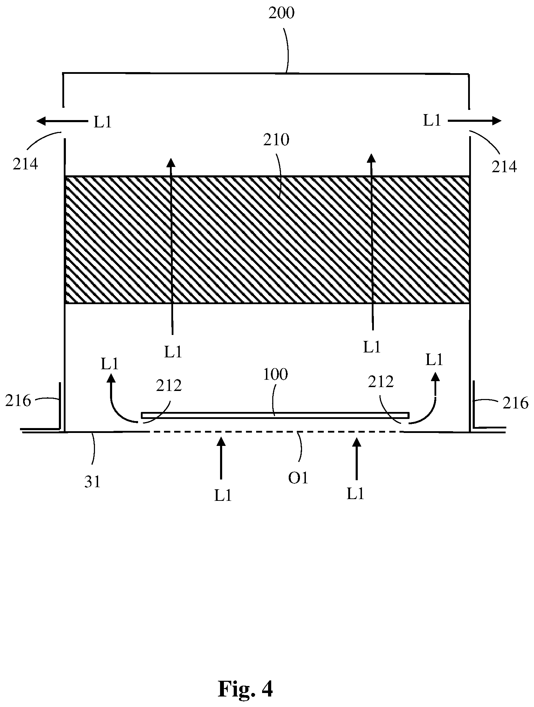

Figure 4 shows a cross section of a first embodiment of a gas filter device for a pressure relief arrangement.

The gas filter device may be used in connection with the first embodiment of the pressure relief arrangement.

The gas filter device may comprise a first casing 200 and a gas filter 210 arranged in the first casing 200. The first casing 200 may comprise an inlet opening 212 for receiving pressurized gases discharged from the pressure relief opening O1 and an outlet opening 214 for discharging gases from the first casing 200. The first casing 200 may be mounted on the roof 31 of the enclosure 10 via a flange 216. The gas filter 210 may be provided within the first casing 200 between the inlet opening 212 and the outlet opening 214 of the first casing 200. The gases L1 discharging from the pressure relief opening O1, pass first into the first casing 200 via the inlet opening 212, and then further through the gas filter 210, and finally through the outlet opening 214 out from the first casing 200. The gases L1 pass through the gas filter 210 where the gases L1 are purified from detrimental components present in the gases.

The inlet opening 212 may be formed as a circular inlet opening enclosing the pressure relief opening O1 and the pressure relief hatch 100. The inlet opening 212 may thus be arranged in a bottom of the first casing 200. The bottom of the first casing 200 could be open forming the inlet opening 212. The inlet opening 212 could on the other hand be formed of several inlet openings.

The outlet opening 214 may be formed as a slit passing along a perimeter of the first casing 200. The outlet opening may be arranged in the upper portion of the first casing 200. The outlet opening 214 may extend only along a portion of the perimeter of the first casing 200. The gases could thus be directed into a certain direction from the outlet opening 214. The outlet opening 214 could also be formed of several outlet openings.

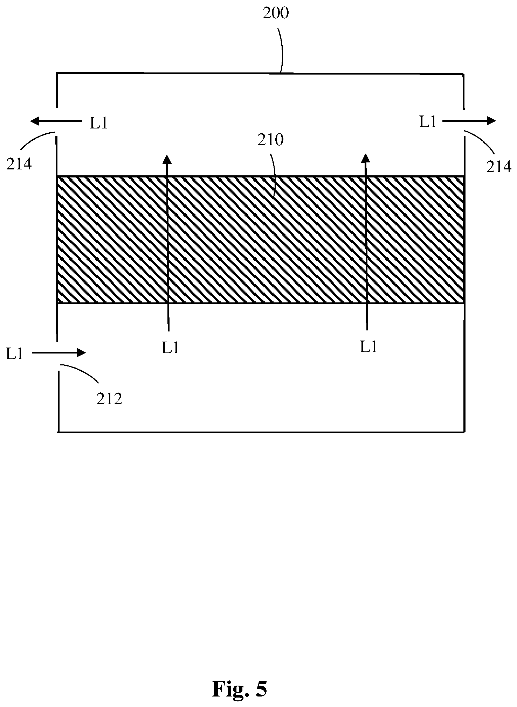

Figure 5 shows a cross section of a second embodiment of a gas filter device for a pressure relief arrangement.

The gas filter device may be used in connection with the second embodiment of the pressure relief arrangement.

The gas filter device may comprise a first casing 200 and a gas filter 210 arranged in the first casing 200. The first casing 200 may comprise an inlet opening 212 for receiving pressurized gases discharged from the pressure relief opening O1 and an outlet opening 214 for discharging gases from the casing 200. The channel 220 shown in figure 3 may be connected to the inlet opening 212 for directing the gases from the channel 220 into the first casing 200 through the inlet opening 212. The first casing 200 may be mounted on any surface apart from the enclosure 10 or in connection with a wall of the enclosure 10. A gas filter 210 may be provided between the inlet opening 212 and the outlet opening 214 in the first casing 200. The pressurized gases discharging from the pressure relief opening O1, pass first via the second casing 230 and the channel 220 into the first casing 200 via the inlet opening 212, and then further through the gas filter 210, and finally through the outlet opening 214 out from the first casing 200.

The inlet opening 212 may be formed as a circular opening in a side wall of the first casing 200. The inlet opening 212 may be arranged in a lower portion of the first casing 200.

The outlet opening 214 may be formed as a slit passing along a perimeter of the first casing 200. The outlet opening may be arranged in the upper portion of the first casing 200. The outlet opening 214 may extend only along a portion of the perimeter of the first casing 200. The gases could thus be directed into a certain direction from the outlet opening 214. The outlet opening 214 could also be formed of several outlet openings.

The gas filter 210 used in the gas filter devices shown in figures 4 and 5 may work according to an adsorbing principle. The gas filter 210 may comprise an adsorbing material that adsorbs detrimental compounds present in gases discharging from the pressure relief opening O1. The gases react with the active material in the gas filter 210. The gas filter 210 may comprise activated carbon. The gas filter 210 may be made of activated carbon. The gas filter 210 could on the other hand comprise carbon aerogel or some other suitable material for adsorbing gases. The gases react with the active material in the gas filter 210, wherein detrimental compounds present in the gases will be adsorbed in the gas filter 210.

The pressure relief opening O1 in the enclosure 10 may be circular. The pressure relief opening O1 in the enclosure 10 could on the other hand have any other geometrical form, it could be e.g. elliptic, rectangular or polygonal.

The inlet opening 212 in the first casing 200 may be circular. The inlet opening 212 in the first casing 200 could on the other hand have any geometrical form i.e. it could be elliptic, rectangular, or polygonal.

The outlet opening 214 in the first casing 200 may be formed as a slit. The outlet opening 214 in the first casing 200 could on the other hand have any geometrical form i.e. it could be circular, elliptic, rectangular, or polygonal.

The first casing 200 may have a cylindrical form. A horizontal cross-section of the first casing 200 may thus be circular. A cross-section of the first casing 200 could, however, also have any other suitable geometrical shape. The horizontal cross-section of the first casing 200 could be elliptic, rectangular or polygonal.

The second casing 230 may have a cylindrical form. A horizontal cross-section of the second casing 230 may thus be circular. A cross-section of the second casing 230 could, however, also have any other suitable geometrical shape. The horizontal cross-section of the second casing 230 could be elliptic, rectangular or polygonal.

The channel arrangement 220 may be formed of a duct extending between the first casing 200 and the second casing 230. A cross-section of the duct may be circular. A cross-section of the duct could, however, also have any other suitable geometrical shape. The horizontal cross-section of the duct could be elliptic, rectangular or polygonal.

The figures show embodiments in which the gas filter 210 is positioned in a first casing 200. This is an advantageous embodiment, but the gas filter 210 must not necessary be positioned in a casing. The gas filter 210 could e.g. be attached directly to the outer surface of the enclosure 10. The gas filter 210 could be formed e.g. as a cylinder surrounding the pressure relief opening O1. The lower end of the cylinder could be open and the upper end of the cylinder could be closed. The pressurized gases discharging from the pressure relief opening O1 would first pass into the inner space of the cylinder and then through the cylindrical wall of the gas filter out of the gas filter.

The first casing 200 may be formed as a separate part which is attachable to the outer surface of the enclosure 10. The attachment could be arranged through a flange. The flange could be an integral part of the first casing 200, wherein the flange and thereby also the first casing 200 would be attached to the enclosure 10. Another possibility would be that the flange is an integral part of the enclosure 10. The first casing 200 would then be attached to the flange.

The first casing 200 could on the other hand be formed as an integral part of the enclosure 10. The first casing 200 could be provided with a hatch through which the gas filter could be replaced.

The second casing 230 could naturally also be formed as a separate part which is attachable to the outer surface of the enclosure 10 or as an integral part of the enclosure 10.

The second casing 230 may not be needed as a separate part at all. The channel arrangement 220 may be connected directly to the pressure relief opening O1 in the enclosure 10.

## Claims

1. A pressure relief arrangement comprising an enclosure (10) provided with electrical equipment, a pressure relief opening (O1) in a wall (31) of the enclosure (10), and a gas filter (210) arranged in connection with the pressure relief opening (O1), wherein the gas filter (210) comprises an adsorbing material for adsorbing detrimental compounds present in the pressurized gases discharging from the pressure relief opening (O1), **characterized in that** a pressure relief hatch (100) is arranged in connection with the pressure relief opening (O1), the pressure relief hatch (100) closing the pressure relief opening (O1) in normal operational conditions and opening the pressure relief opening (O1) in exceptional operational conditions.

2. The pressure relief arrangement as claimed in claim 1, wherein the gas filter (210) encloses the pressure relief opening (O1).

3. The pressure relief arrangement as claimed in claim 1, wherein the gas filter (210) is arranged at a distance from the pressure relief opening (O1), a channel arrangement (220) conducting the pressurized gases from the pressure relief opening (O1) to the gas filter (210).

4. The pressure relief arrangement as claimed in any one of claims 1 to 3, wherein the gas filter (210) is arranged in a first casing (200) comprising an inlet opening (212) for receiving pressurized gases discharged from the pressure relief opening (O1) and an outlet opening (214) for discharging gases from the first casing (200), the pressurized gases passing through the gas filter (210) positioned within the first casing (200) between the inlet opening (212) and the outlet opening (214).

5. The pressure relief arrangement as claimed in claim 4, wherein the first casing (200) is arranged on an outer surface of the enclosure (10), the first casing (200) enclosing the pressure relief opening (O1).

6. The pressure relief arrangement as claimed in claim 5, wherein the first casing (200) is an integral part of the enclosure (10).

7. The pressure relief arrangement as claimed in claim 5, wherein the first casing (200) is a separate part which is attachable to the enclosure (10).

8. The pressure relief arrangement as claimed in claim 4, wherein the first casing (200) is arranged at a distance from the pressure relief opening (O1), a channel arrangement (220) conducting the pressurized gases from the pressure relief opening (O1) to the inlet opening (212) in the first casing (200).

9. The pressure relief arrangement as claimed in claim 8, wherein the first casing (200) is supported on the enclosure (10).

10. The pressure relief arrangement as claimed in claim 8, wherein a second casing (230) is arranged on an outer surface of the enclosure (10), the second casing (230) enclosing the pressure relief opening (O1), the channel arrangement (220) being arranged between the second casing (230) and the first casing (200) for conducting pressurized gases discharging from the pressure relief opening (O1) to the inlet opening (212) of the first casing (200).

11. The pressure relief arrangement as claimed in any one of claims 1 to 10, wherein the gas filter (210) comprises activated carbon.

## Patentansprüche

1. Druckentlastungsanordnung, die eine mit einer elektrischen Ausrüstung versehene Umhüllung (10), eine Druckentlastungsöffnung (01) in einer Wand (31) des Gehäuses (10) und einen in Verbindung mit der Druckentlastungsöffnung (O1) angeordneten Gasfilter (210) umfasst, wobei der Gasfilter (210) ein adsorbierendes Material zum Adsorbieren schädlicher Verbindungen umfasst, die in den aus der Druckentlastungsöffnung (01) ausgestoßenen Druckgasen vorhanden sind, **dadurch gekennzeichnet, dass** eine Druckentlastungsklappe (100) in Verbindung mit der Druckentlastungsöffnung (01) angeordnet ist, wobei die Druckentlastungsklappe (100) die Druckentlastungsöffnung (O1) bei normalen Betriebsbedingungen schließt und die Druckentlastungsöffnung (O1) bei außergewöhnlichen Betriebsbedingungen öffnet.

2. Druckentlastungsanordnung nach Anspruch 1, wobei der Gasfilter (210) die Druckentlastungsöffnung (01) umhüllt.

3. Druckentlastungsanordnung nach Anspruch 1, wobei der Gasfilter (210) in einem Abstand von der Druckentlastungsöffnung (01) angeordnet ist, wobei eine Kanalanordnung (220) die Druckgase von der Druckentlastungsöffnung (01) zu dem Gasfilter (210) leitet.

4. Druckentlastungsanordnung nach einem der Ansprüche 1 bis 3, wobei der Gasfilter (210) in einem ersten Gehäuse (200) angeordnet ist, das eine Einlassöffnung (212) zum Aufnehmen von aus der Druckentlastungsöffnung (O1) ausgestoßenen Druckgasen und eine Auslassöffnung (214) zum Ausstoßen von Gasen aus dem ersten Gehäuse (200) umfasst, wobei die Druckgase durch den Gasfilter (210) strömen, der in dem ersten Gehäuse (200) zwischen der Einlassöffnung (212) und der Auslassöffnung (214) positioniert ist.

5. Druckentlastungsanordnung nach Anspruch 4, wobei das erste Gehäuse (200) auf einer Außenfläche der Umhüllung (10) angeordnet ist, wobei das erste Gehäuse (200) die Druckentlastungsöffnung (01) umhüllt.

6. Druckentlastungsanordnung nach Anspruch 5, wobei das erste Gehäuse (200) ein integraler Teil der Umhüllung (10) ist.

7. Druckentlastungsanordnung nach Anspruch 5, wobei das erste Gehäuse (200) ein separates Teil ist, das an der Umhüllung (10) anbringbar ist.

8. Druckentlastungsanordnung nach Anspruch 4, wobei das erste Gehäuse (200) in einem Abstand von der Druckentlastungsöffnung (01) angeordnet ist, wobei eine Kanalanordnung (220) die Druckgase von der Druckentlastungsöffnung (O1) zu der Einlassöffnung (212) in dem ersten Gehäuse (200) leitet.

9. Druckentlastungsanordnung nach Anspruch 8, wobei das erste Gehäuse (200) auf der Umhüllung (10) getragen ist.

10. Druckentlastungsanordnung nach Anspruch 8, wobei ein zweites Gehäuse (230) auf einer Außenfläche der Umhüllung (10) angeordnet ist, wobei das zweite Gehäuse (230) die Druckentlastungsöffnung (01) umhüllt, wobei die Kanalanordnung (220) zwischen dem zweiten Gehäuse (230) und dem ersten Gehäuse (200) zum Leiten von aus der Druckentlastungsöffnung (01) ausgestoßenen Druckgasen zu der Einlassöffnung (212) des ersten Gehäuses (200) angeordnet ist.

11. Druckentlastungsanordnung nach einem der Ansprüche 1 bis 10, wobei der Gasfilter (210) Aktivkohle umfasst.

## Revendications

1. Agencement de décompression comprenant une enceinte (10) munie d'un équipement électrique, une ouverture de décompression (O1) dans une paroi (31) de l'enceinte (10), et un filtre à gaz (210) disposé en liaison avec l'ouverture de décompression (O1), le filtre à gaz (210) comprenant un matériau adsorbant pour adsorber les composés nocifs présents dans les gaz sous pression évacués par l'ouverture de décompression (O1), **caractérisé en ce qu'**une trappe de décompression (100) est disposée en liaison avec l'ouverture de décompression (O1), la trappe de décompression (100) fermant l'ouverture de décompression (01) dans des conditions de fonctionnement normales et ouvrant l'ouverture de décompression (01) dans des conditions de fonctionnement exceptionnelles.

2. Agencement de décompression selon la revendication 1, le filtre à gaz (210) entourant l'ouverture de décompression (O1).

3. Agencement de décompression selon la revendication 1, le filtre à gaz (210) étant disposé à distance de l'ouverture de décompression (O1), un agencement de canaux (220) conduisant les gaz sous pression de l'ouverture de décompression (O1) au filtre à gaz (210).

4. Agencement de décompression selon l'une quelconque des revendications 1 à 3, le filtre à gaz (210) étant disposé dans un premier boîtier (200) comprenant une ouverture d'entrée (212) pour recevoir les gaz sous pression évacués par l'ouverture de décompression (O1) et une ouverture de sortie (214) pour évacuer les gaz hors du premier boîtier (200), les gaz sous pression traversant le filtre à gaz (210) positionné à l'intérieur du premier boîtier (200) entre l'ouverture d'entrée (212) et l'ouverture de sortie (214).

5. Agencement de décompression selon la revendication 4, le premier boîtier (200) étant disposé sur une surface extérieure de l'enceinte (10), le premier boîtier (200) entourant l'ouverture de décompression (O1).

6. Agencement de décompression selon la revendication 5, le premier boîtier (200) faisant partie intégrante de l'enceinte (10).

7. Agencement de décompression selon la revendication 5, le premier boîtier (200) étant une pièce séparée qui peut être fixée à l'enceinte (10).

8. Agencement de décompression selon la revendication 4, **caractérisé en ce que** le premier boîtier (200) est disposé à distance de l'ouverture de décompression (O1), un agencement de canaux (220) conduisant les gaz sous pression de l'ouverture de décompression (O1) à l'ouverture d'entrée (212) dans le premier boîtier (200).

9. Agencement de décompression selon la revendication 8, le premier boîtier (200) étant supporté sur l'enceinte (10) .

10. Agencement de décompression selon la revendication 8, un second boîtier (230) étant disposé sur une surface extérieure de l'enceinte (10), le second boîtier (230) entourant l'ouverture de décompression (O1), l'agencement de canaux (220) étant disposé entre le second boîtier (230) et le premier boîtier (200) pour conduire les gaz sous pression évacués par l'ouverture de décompression (O1) vers l'ouverture d'entrée (212) du premier boîtier (200).

11. Agencement de décompression selon l'une quelconque des revendications 1 à 10, le filtre à gaz (210) comprenant du charbon actif.
